# EUROPEAN PATENT SPECIFICATION

(11) **EP 3 288 754 B1**
(45) Date of publication and mention of the grant of the patent: **23.01.2019**
(21) Application number: 16735717.7
(22) Date of filing: 28.04.2016
(51) Int. Cl.: B32B 5/02, B32B 5/06, B32B 5/26, B32B 7/02, B32B 7/06, B32B 3/30, D03D 11/00, A63B 6/00, A63B 21/00

(54) **A FABRIC ARTICLE**
STOFFARTIKEL
ARTICLE EN TISSU

(30) Priority: 28.04.2015 IN 1693MU2015
(43) Date of publication of application: 07.03.2018
(73) Proprietor: Kalati, Ritesh, Mumbai - 400052 (IN)
(72) Inventor: Kalati, Ritesh, Mumbai - 400052 (IN)
(74) Representative: Dallimore, Geoffrey Robert
(86) International application number: PCT/IN2016/000108
(87) International publication number: WO 2016/174684

(56) References cited:
- US-A1- 2006 060 257
- US-A1- 2007 144 221
- US-A1- 2013 153 081
- DATABASE WPI Week 201135 Thomson Scientific, London, GB; AN 2011-E93776 XP002762906, & CN 201 775 897 U (CHEN Q) 30 March 2011 (2011-03-30)

## Description

### FIELD OF THE INVENTION

The invention relates to a fabric article and a process of making the fabric article.

### BACKGROUND OF THE INVENTION

Fabric articles made of natural and/or synthetic fibers find use in a variety of applications such as clothing, floor covering, yoga mats, exercise mats, prayer mats, play mats, electronic device protective accessories, furniture, footwear, etc. Especially with a recent surge of interest in indoor activities like yoga, articles are used in various different configurations for use as yoga, pilates or exercise mats.

A known yoga mat is a flat-woven mat which is also known as 'Indian dhurries' or quilted fabric mats. Such mats are either too flat and do not provide sufficient cushioning to a user/practitioner or they are uneven and do not provide a surface for easy movement, and hence are uncomfortable and not practical for yoga. These mats do not have any provisions to grip the floor underneath and so tend to move/slip out of position while the practitioner is performing yoga. Owing to these reasons, such mats are generally not preferred by practitioners.

Another known yoga mat is a composite mat comprising of a flat fabric with layers of polyvinyl chloride or thermoplastic elastomer or latex or ethylene-vinyl acetate or other materials. Since the surface of the mat in contact with the practitioner is the layer having polyvinyl chloride or thermoplastic elastomer or latex or ethylene-vinyl acetate, such mats do not absorb sweat of the practitioner leaving the sweat to pool on the top surface. This makes the top surface slippery and could be harmful to the yoga practitioner. Further, these mats are generally not washable in washing machines requiring the mats to be wiped or disinfected manually. To overcome these disadvantages a separate fabric, such as a rug or a yoga towel is laid on top as a cover to these mats. Rugs and yoga towel absorbs sweat, improves grip and are washable. However, the rug or yoga towel is not used by itself as it lacks cushioning and bunches-up easily.

Use of materials like low quality polyvinyl chloride to make the mat also exposes the practitioner to toxic risks, especially when such mats are used in high heat and high humidity environments. In addition to the above, such synthetic mats are not easily biodegradable and hence are not environment friendly.

Another type of yoga mat is a "sticky mat" which is made of polyvinyl chloride or thermoplastic elastomer or polyurethane or latex or natural rubber or ethylene-vinyl acetate. These mats suffer from the inherent disadvantages of using polyvinyl chloride or thermoplastic elastomer or polyurethane or latex or ethylene-vinyl acetate discussed above. They sometimes also have an unpleasant odor due to these materials or additives, which is disturbing to the user. The higher quality mats can be dense and heavy, which makes them difficult to carry or wash.

CN 201775897 U discloses a multilayer yoga mat comprising woven layers.

In view of the above, there remains a need in the art for a fabric article addressing at-least the above mentioned problems.

### SUMMARY OF THE INVENTION

In one aspect, the present invention provides a fabric article, comprising a first face of densely woven fabric having plurality of outward bulging regions, a second face of loosely woven fabric; and an intermediate region between the first face and the second face, the intermediate region having filling yarn woven in-between the first face and the second face such that the filling yarn accommodates behind the bulging regions further pushing the bulging regions outwards, thereby providing cushioning and depth to the fabric article.

In another aspect, the present invention provides a process for making a fabric article, the method comprising the steps of, forming a first face of densely woven fabric with a plurality of bulging regions, forming a second face of loosely woven fabric, and weaving a filling yarn in-between the first face and the second face to form a single fabric such that, the filling yarn accommodates behind the bulging regions further pushing the bulging regions outwards, thereby providing cushioning and depth to the fabric article.

### BRIEF DESCRIPTION OF THE DRAWINGS

Reference will be made to embodiments of the invention, examples of which may be illustrated in accompanying figures. These figures are intended to be illustrative, not limiting. Although the invention is generally described in context of these embodiments, it should be understood that it is not intended to limit the scope of the invention to these particular embodiments.
Figure 1A and 1B shows a fabric article in accordance with an embodiment of the invention.
Figure 2A and 2B shows a fabric article in accordance with another embodiment of the invention.
Figure 3 shows a fabric article in accordance with another embodiment of the invention.

### DESCRIPTION OF THE INVENTION

The present invention is directed towards a fabric article which is durable, washable, portable, has sufficient cushioning or depth and can be adapted for various uses.

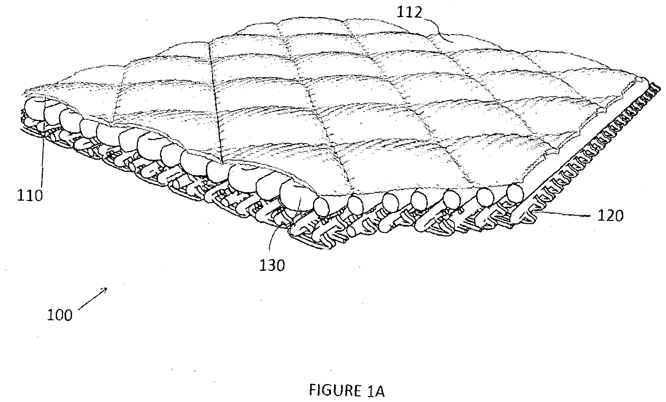

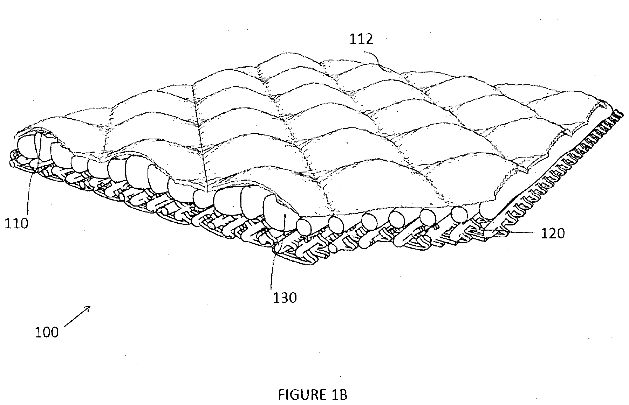

Figure 1A and 1B show a fabric article 100 in accordance with an embodiment of the invention. As illustrated, the fabric article has a first face 110, a second face 120 and an intermediate region 130 between the first face and the second face.

The first face is a densely woven face and comprises plurality of bulging regions 112. Accordingly, the first face on its outer-side has plurality of bulging regions and on its inner-side has concave regions formed due to the bulging regions. The second face is loosely woven. Preferably, the first face and second face are formed of the same yarns. The intermediate region as shown is between the first face and the second face, and has filling yarn or thick plied yarn woven in-between the first face and the second face. The filling yarn is woven in-between the first face and the second face such that the filling yarn accommodates in the inner-side of the first face. The filling yarn accommodates in the concave regions further pushing the bulging regions on the outer face outwards, thereby providing cushioning to the fabric article as shown in figure 1A. Further, the fabric is treated in an air-induced temperature controlled chamber. The hot air causes each face and the filling yarn to shrink, wherein the filling yarn shrinks and accommodates into the concave regions further pushing the bulging regions on the outer side outwards, thereby providing additional cushioning and depth to the fabric article, as can be seen in figure 1B.

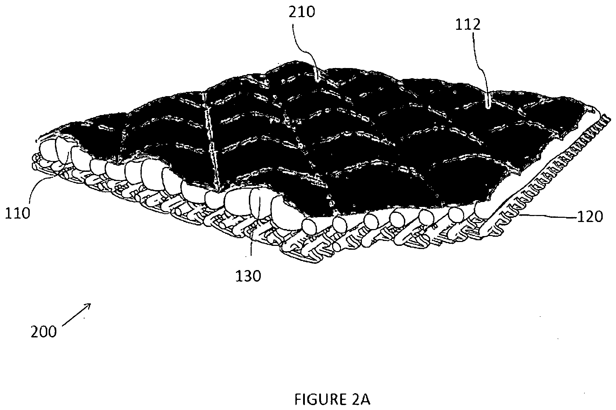

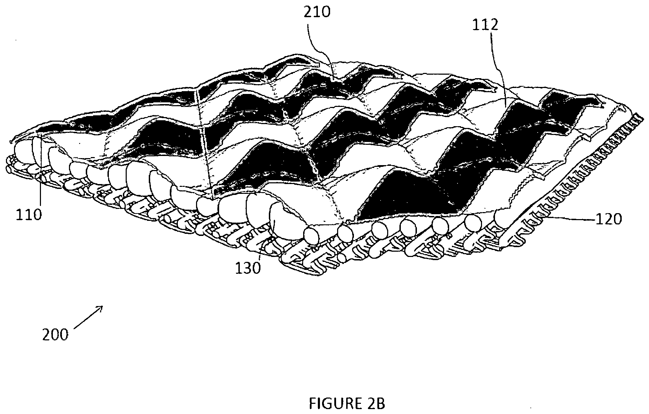

Figure 2A and 2B show a fabric article 200 in accordance with another embodiment of the invention. The fabric article shown in figure 2A and 2B is a coated fabric article, wherein the fabric article 100 shown in figure 1 has a coating 210. As shown, the coating is applied on the first face of the fabric article. Alternately, the coating can be applied to the second face of the fabric article. The coating once applied binds the fabric article and provides strength/rigidity to the fabric article and prolongs life of the fabric article. Especially, on the first face the coating provides strength/rigidity to the bulging regions and sustains the cushioning provided by the bulging regions. Additionally, the coating on the fabric article acts as an anti-slip surface and also provides other desired features such as water-resistance and soil-resistance. Advantageously, the fabric article provides a reinforced cushioned fabric article which is also slip resistant. The coating may be applied in any pattern that is effective in reinforcing the fabric article and also provides slip-resistance. For example - The coating can be applied on the entire surface as shown in figure 2A or in a parallel spaced apart relationship as shown in figure 2B. The coating applied to the fabric article can be any material, such as natural rubber, latex, polyvinyl chloride, thermoplastic elastomer, Polyurethane, silicon, etc.

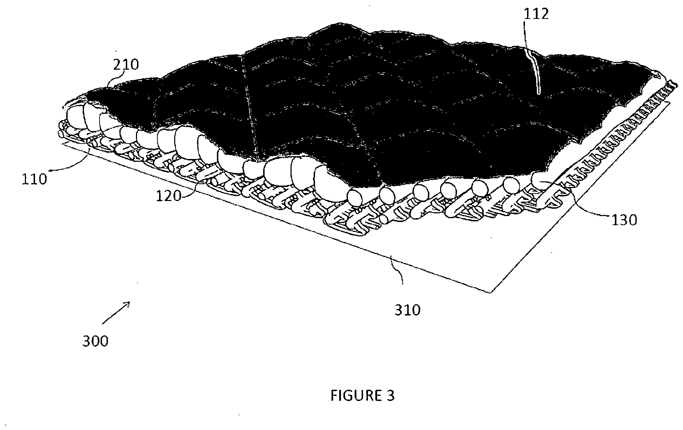

Figure 3 shows a fabric article 300 in accordance with another embodiment of the invention. The fabric article shown in figure 3 is similar to the fabric article shown in figure 2, wherein the fabric article further comprises of an additional layer 310. As shown, the additional layer is adapted to the second face of the fabric article for covering the second face, and thereafter the fabric article can be used for various applications. The additional layer may be a fixed layer or a removable layer. Also, the fabric article may be a composite structure whereby the additional layer is integrally formed with the fabric article. The additional layer could have an additional removable layer. Further, the additional layer is preferably a flat surface and may comprise regions/zones of weaving or stitching or embroidery or nibs or latex or any other alteration to enhance it's functionality on the upper side and/or seep-proof coating on its bottom side.

Further, the present invention provides a process for making a fabric article in accordance with an embodiment of the invention. The process starts by forming a first face of densely woven fabric with plurality of bulging regions, and a second face of loosely woven fabric in a looming machine or any other fabric making machine. The bulging regions formed on the first face are formed on the outer-side of the first face and accordingly concave regions are formed in the inner-side of the first face. The bulging regions of the first face are formed depending upon weaving pattern of the yarns of the second face. In this regard, the yarns of the second face are woven such that the yarns woven into the second face pulls the front face resulting in plurality of bulging regions being formed on the first face. The bulging regions of the first face are formed based upon the pattern in which the yarns of the second face are woven. The woven yarns give a pull to certain corresponding predefined yarns and this pull of certain yarns causes the first face to have plurality of bulging regions at the predefined pattern. The bulging regions can be formed by interlacement of warp and weft at predefined patterns. Preferably, the first face and the second face are formed simultaneously. The first face and second face are formed of the same yarns. Additionally, a filling yarn is woven in-between the first face and the second face to form a single fabric. The filling yarn is woven in-between the first face and second face simultaneously while forming the first face and the second face i.e. in a single weaving process. Thereafter, the fabric is treated by applying induced heat/hot air to the fabric. For this purpose the fabric is put in an air-induced temperature controlled chamber. The hot air causes each face and the filling yarn to shrink, wherein the filling yarn shrinks and accommodates into the concave regions further pushing the bulging regions on the outer side outwards, thereby providing sufficient cushioning and depth to the fabric article.

Further, the process may comprise the step of applying a coating to the first face and/or the second face of the fabric article. According to the present invention, the coating is applied to the first face of the fabric article. The coating may be applied in any patterns or quantities forming reinforcement zones on the fabric article. The coating once applied binds the fabric article and provides strength to the fabric article, thereby prolonging life of the fabric article. Additionally, the coating also acts as an anti-slip surface on the fabric article. Advantageously, the fabric article provides a reinforced cushioned fabric article which is slip resistant. The coating applied to the fabric article can be any of natural rubber, latex, polyvinyl chloride, thermoplastic elastomer, polyurethane, silicon, etc, or any other such material.

Furthermore, the process comprises the step of adapting an additional layer to the first face and/or the second face. The additional layer is adapted to the second face of the fabric article for covering the second face, and thereafter the fabric article can be used for various applications. The additional layer may be a fixed layer which is stitched to the fabric article, or the additional layer can be a removable layer which can be adapted via suitable means. The additional layer could also be formed or added during the process of forming the fabric article whereby the additional layer is integral with the fabric article. The additional layer could have an additional removable layer. Further, the additional layer is preferably a flat surface and may comprise regions/zones of weaving or stitching or embroidery or nibs or latex on its upper side and/or seep-proof coating on its bottom side.

According to the present invention, the fabric article can be made of natural fibers/yarns. Natural fibers can be selected from any of cotton, flax, hemp, coconut, bamboo, jute, banana, wool, silk and any other plant or animal sourced fibers. Further, the fabric article can be dyed with natural dyes as per requirement. Use of natural fibers and dyes makes the fabric article chemical free and environment friendly. Alternately, the fabric article can also be made of synthetic fibers such as polyester, nylon or any other fibers and also be dyed with synthetic dyes.

Further, the fabric of the first face, second face or the additional layer contains coated fibers/yarns. The yarns can be coated with various materials, such as rubber, latex and the like. In this regard, the fabric article can be made of natural fibers/yarns and/or coated yarns, or synthetic fibers/yarns and/or coated yarns. Use of coated yarns imparts strength to the fabric article and thereby prolongs life of the fabric article. Also, coated yarns allow the fabric article to be washed and re-used within short spans. The coated yarns also improves grip of the article i.e. prevents the article from slipping.

In an example application, the fabric article may be used as a yoga mat, meditation mat, child's mat, sunbathing mat, beach mat, massage mat or any other mat to prevent direct contact with a floor or other surface. In this regard, an additional layer is adapted on the fabric article as shown in figure 3. The additional layer, according to the present invention is adapted on the second face of the fabric article. The additional layer may be a fixed layer or a removable layer. Further, if the additional layer is fixed, another removable layer may also be adapted on top of the fixed additional layer. The removable additional layer or the additional removable layer may be seep-proof. The removable additional layer provides the advantage of replacing the additional layer and using the same fabric article with another removable additional layer for consecutive sessions by different users. Further, the additional layer is preferably a flat surface and may comprise regions/zones of weaving or stitching or embroidery or nibs or latex on its upper side and/or seep-proof coating on its bottom side.. Advantageously, the regions/zones on the upper side aid a user while performing yoga or exercise, and the seep-proofing coating allows sweat to seep through the top face but not beyond the bottom side, thereby leaving the mat underneath it dry. Also, the first face, second face and the intermediate region of the fabric article provide sufficient cushioning to protect joints of the user, and the coating on the first face ensures that there is no slippage of the mat while the user is performing yoga or any other exercise/act. The mat also provides the advantage of being washable by hand or in a machine and tumble dried allowing the mat to be repeatedly used and hygienically cleaned. Also, the mat is portable whereby the mat can be rolled or folded like a news-paper for easy carrying. Although this example is directed towards mats, the application of fabric article is not limited to mats, and the fabric article may be used as clothing, floor covering, play mat, prayer mat, furniture, flooring, electronic device protective accessory, bags, footwear etc.

## Claims

1. A fabric article, comprising:
a first face of densely woven fabric having plurality of outward bulging regions;
a second face of loosely woven fabric; and
an intermediate region between the first face and the second face, the intermediate region having filling yarn woven in-between the first face and the second face such that the filling yarn accommodates behind the bulging regions further pushing the bulging regions outwards, thereby providing cushioning and depth to the fabric article.

2. The fabric article as claimed in claim 1, wherein additional cushioning is provided to the bulging regions by treating the fabric article with induced heat/hot air.

3. The fabric article as claimed in claim 1, wherein the fabric article further comprises a coating applied on the first face and/or the second face for reinforcing the fabric article, and providing slip-resistance to the fabric article.

4. The fabric article as claimed in claim 1, wherein the fabric article further comprises an additional layer adapted to the first face and/or the second face.

5. The fabric article as claimed in claim 4, wherein the additional layer is fixed or removable.

6. The fabric article as claimed in any of the preceding claims, wherein the first face, second face or the additional layer is made of natural yarns/fibers and/or coated natural yarns/fibers.

7. The fabric article as claimed in any of the preceding claims, wherein the first face, second face or the additional layer is made of synthetic yarns/fibers and/or coated synthetic yarns/fibers.

8. The fabric article as claimed in claim 6 or 7, wherein the coated yarns are yarns coated with materials such as rubber, latex and the like.

9. A process for making a fabric article, the process comprising the steps of:
forming a first face of densely woven fabric with a plurality of bulging regions;
forming a second face of loosely woven fabric; and
weaving a filling yarn in-between the first face and the second face to form a single fabric such that, the filling yarn accommodates behind the bulging regions further pushing the bulging regions outwards, thereby providing cushioning and depth to the fabric article.

10. The process as claimed in claim 9, further comprising the step of treating the fabric by applying induced heat/hot air, the hot air causes each face and the filling yarn to shrink, and the shrinkage causes the filling yarn to accommodate behind the bulging region of the first face further pushing the bulging regions more outwards, thereby providing additional cushioning and depth to the fabric article.

11. The process as claimed in claim 9, wherein the process comprises the step of applying a coating on the first face and/or the second face for reinforcing the fabric article, and providing slip-resistance to the fabric article.

12. The process as claimed in claim 9, wherein the process comprises the step of adapting an additional layer to the first face and/or the second face.

## Patentansprüche

1. Gewebegegenstand, umfassend:
eine erste Seite aus dicht gewebtem Gewebe mit einer Vielzahl von nach außen ausgebauchten Bereichen;
eine zweite Seite aus locker gewebtem Gewebe; und
einen Zwischenbereich zwischen der ersten Seite und der zweiten Seite, wobei der Zwischenbereich ein Füllgarn aufweist, das zwischen der ersten Seite und der zweiten Seite eingewebt ist, so dass das Füllgarn hinter den ausgebauchten Bereichen aufgenommen ist und die ausgebauchten Bereiche weiter nach außen drückt, um dem Gewebegegenstand Kissenwirkung und Tiefe zu verleihen.

2. Gewebegegenstand gemäß Anspruch 1, wobei den ausgebauchten Bereichen durch Behandlung des Gewebegegenstands mit induzierter Wärme/Heißluft zusätzliche Kissenwirkung verliehen ist.

3. Gewebegegenstand gemäß Anspruch 1, wobei der Gewebegegenstand ferner eine Beschichtung, die auf die erste Seite und/oder die zweite Seite aufgebracht ist, zum Verstärken des Gewebegegenstands und zum Verleihen von Rutschfestigkeit an den Gewebegegenstand umfasst.

4. Gewebegegenstand gemäß Anspruch 1, wobei der Gewebegegenstand ferner eine zusätzliche Schicht umfasst, die an die erste Seite und/oder die zweite Seite angepasst ist.

5. Gewebegegenstand gemäß Anspruch 4, wobei die zusätzliche Schicht fest oder entfernbar ist.

6. Gewebegegenstand gemäß einem der vorstehenden Ansprüche, wobei die erste Seite, die zweite Seite oder die zusätzliche Schicht aus natürlichen Garnen/Fasern und/oder beschichteten natürlichen Garnen/Fasern besteht.

7. Gewebegegenstand gemäß einem der vorstehenden Ansprüche, wobei die erste Seite, die zweite Seite oder die zusätzliche Schicht aus synthetischen Garnen/Fasern und/oder beschichteten synthetischen Garnen/Fasern besteht.

8. Gewebegegenstand gemäß Anspruch 6 oder 7, wobei die beschichteten Garne mit Materialien wie Kautschuk, Latex und dergleichen beschichtete Garne sind.

9. Verfahren zur Herstellung eines Gewebegegenstands, wobei das Verfahren die Schritte umfasst:
Bilden einer ersten Seite aus dicht gewebtem Gewebe mit einer Vielzahl von ausgebauchten Bereichen;
Bilden einer zweiten Seite aus locker gewebtem Gewebe; und
Weben eines Füllgarns zwischen die erste Seite und die zweite Seite, um ein einziges Gewebe zu bilden, so dass das Füllgarn hinter den ausgebauchten Bereichen aufgenommen ist und die ausgebauchten Bereiche weiter nach außen drückt, um dem Gewebegegenstand Kissenwirkung und Tiefe zu verleihen.

10. Verfahren gemäß Anspruch 9, ferner umfassend den Schritt des Behandelns des Gewebes durch Anwenden von induzierter Wärme/Heißluft, wobei die Heißluft bewirkt, dass jede Seite und das Füllgarn schrumpfen, und die Schrumpfung bewirkt, dass das Füllgarn hinter dem ausgebauchten Bereich der ersten Seite aufgenommen wird und die ausgebauchten Bereiche weiter nach außen drückt und so dem Gewebegegenstand zusätzliche Kissenwirkung und tiefe verleiht.

11. Verfahren gemäß Anspruch 9, wobei das Verfahren den Schritt des Aufbringens einer Beschichtung auf die erste Seite und/oder die zweite Seite zum Verstärken des Gewebegegenstands und Verleihen von Rutschfestigkeit an den Gewebegegenstand umfasst.

12. Verfahren gemäß Anspruch 9, wobei das Verfahren den Schritt des Anpassens einer zusätzlichen Schicht an die erste Seite und/oder die zweite Seite umfasst.

## Revendications

1. Article de tissu, comprenant :
une première face de tissu densément tissé comportant une pluralité de régions de renflement vers l'extérieur ;
une deuxième face de tissu lâchement tissé ; et
une région intermédiaire entre la première face et la deuxième face, la région intermédiaire comportant un fil de trame tissé entre la première face et la deuxième face de sorte que le fil de trame soit placé derrière les régions de renflement de façon à pousser plus avant les régions de renflement vers l'extérieur, de façon à conférer rembourrage et profondeur à l'article de tissu.

2. Article de tissu selon la revendication 1, dans lequel un rembourrage supplémentaire est conféré aux régions de renflement par traitement de l'article de tissu avec de la chaleur induite/de l'air chaud.

3. Article de tissu selon la revendication 1, l'article de tissu comprenant en outre un revêtement appliqué sur la première face et/ou la deuxième face pour renforcer l'article de tissu, et conférer une résistance au glissement à l'article de tissu.

4. Article de tissu selon la revendication 1, dans lequel l'article de tissu comprend en outre une couche supplémentaire adaptée à la première face et/ou la deuxième face.

5. Article de tissu selon la revendication 4, dans lequel la couche supplémentaire est fixe ou amovible.

6. Article de tissu selon l'une quelconque des revendications précédentes, dans lequel la première face, la deuxième face ou la couche supplémentaire est constituée de fils/fibres naturels et/ou de fils/fibres naturels revêtus.

7. Article de tissu selon l'une quelconque des revendications précédentes, dans lequel la première face, la deuxième face ou la couche supplémentaire est constituée de fils/fibres synthétiques et/ou de fils/fibres synthétiques revêtus.

8. Article de tissu selon la revendication 6 ou 7, dans lequel les fils revêtus sont des fils revêtus avec des matériaux tels que du caoutchouc, du latex et similaire.

9. Procédé de fabrication d'un article de tissu, le procédé comprenant les étapes de : formation d'une première face de tissu densément tissé avec une pluralité de régions de renflement ; formation d'une deuxième face de tissu lâchement tissé ; et
tissage d'un fil de trame entre la première face et la deuxième face pour former un tissu unique de sorte que, le fil de trame soit placé derrière les régions de renflement de façon à pousser plus avant les régions de renflement vers l'extérieur, de façon à conférer rembourrage et profondeur à l'article de tissu.

10. Procédé selon la revendication 9, comprenant en outre l'étape de traitement du tissu par application de chaleur induite/air chaud, l'air chaud amène chaque face et le fil de trame à rétrécir, et le retrait amène le fil de trame à être placé derrière la région de la première face de façon à pousser les régions de renflement plus avant vers l'extérieur, de façon à conférer un rembourrage et une profondeur supplémentaires à l'article de tissu.

11. Procédé selon la revendication 9, le procédé comprenant l'étape d'application d'un revêtement sur la première face et/ou la deuxième face pour renforcer l'article de tissu, et conférer une résistance au glissement à l'article de tissu.

12. Procédé selon la revendication 9, le procédé comprenant l'étape d'adaptation d'une couche supplémentaire à la première face et/ou la deuxième face.
